(19) Europäisches Patentamt
European Patent Office
Office européen des brevets

(11) Veröffentlichungsnummer: **0 257 225**
**B1**

(12) # EUROPÄISCHE PATENTSCHRIFT

(45) Veröffentlichungstag der Patentschrift: **27.12.90**

(21) Anmeldenummer: **87108870.4**

(22) Anmeldetag: **22.06.87**

(51) Int. Cl.$^5$: **C 08 L 75/04,** C 08 K 3/00, C 08 J 3/02, D 01 F 6/94, C 08 J 5/18, B 29 C 41/16, B 29 C 41/00 // (C08L75/04, 75:04)

(54) **Wärmesensible Polyurethan-dispersionen.**

(30) Priorität: **05.07.86 DE 3622612**

(43) Veröffentlichungstag der Anmeldung:
**02.03.88 Patentblatt 88/09**

(45) Bekanntmachung des Hinweises auf die Patenterteilung:
**27.12.90 Patentblatt 90/52**

(84) Benannte Vertragsstaaten:
**BE DE ES FR GB IT NL**

(56) Entgegenhaltungen:
**EP-A- 167 189**
**DE-A-3 330 197**
**US-A-4 171 391**

(73) Patentinhaber: **BAYER AG**
**D-5090 Leverkusen 1 Bayerwerk (DE)**

(72) Erfinder: **Henning, Wolfgang, Dr.**
**Zur Linde 27**
**D-5067 Kürten (DE)**
Erfinder: **VON Langenthal, Wolfram, Dr.**
**Milanweg 19**
**D-5024 Pulheim (DE)**
Erfinder: **Perrey, Hermann, Dr.**
**Auf der Rheinaue 8**
**D-4150 Krefeld (DE)**
Erfinder: **Striegler, Hellmut, Dr.**
**Friedrich-Bayer-Strasse 12**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 257 225 B1

Courier Press, Leamington Spa, England.

**Beschreibung**

Wärmesensible Latexmischungen sind an sich bekannt. Naturlatex oder synthetische Dispersionen können mit Wärmesensibilisierungsmitteln wärmesensibel eingestellt werden. Diese Wärmesenbilisierung und geeignete Mittel dafür sind z.B. in den Deutschen Patentschriften 1 268 828 und 1 494 037 beschrieben. Ein Verfahren zur Herstellung wärmesensibilisierbarer Synthesekautschuk-Latices ist z.B. in der Deutschen Patentschrift 1 243 394 beschrieben.

Wärmesensible Polymerisatdispersions-Mischungen zeichnen sich durch eine über längere Zeiträume konstante Koagulationstemperatur aus. Das heißt, daß solche Mischungen über Tage und Wochen einwandfrei verarbeitbar bleiben.

Solche wärmesensiblen Mischungen von Polymerdispersionen werden z.B. zur Imprägnierung von Faservliesen oder zur Herstellung von Hohlkörpern nach dem Tauchverfahren (z.B. Handschuhen), zur Beschichtung von Bahnen oder der Herstellung von Elastomerfäden eingesetzt.

Als Wärmesensibilisierungsmittel sind oxalkylierte Polysiloxane in den genannten Literaturstellen beschrieben. Darüber hinaus sind aus zahlreichen Veröffentlichungen andere Wärmesensibilisierungsmittel wie Polyvinylalkylether, Polyacetale, Polyetheramine, Polyetherurethane, alkoxylierte Polyamine und Polyether-Polyurethan-Harnstoffe bekannt.

Polyurethan-Dispersionen jedoch sind mit den beschriebenen Wärmesensibilisierungsmitteln nicht wärmesensibel einstellbar. Dieses liegt möglicherweise daran, daß es sich bei den Polyurethan-Dispersionen in der Regel um emulgatorfreie Ionomere handelt. Auch sogenannte emulgatorfreie Polymerdispersionen, die unter bestimmten Bedingungen der Emulsionspolymerisation gebildet werden können, sind nicht wärmesensibel einstellbar und dem Emulgatorsystem der Dispersion kommt offensichtlich bezüglich der Wärmesensibilisierbarkeit große Bedeutung zu. Polyurethan-Dispersionen lassen sich andererseits, wie auch die emulgatorfreien Emulsionspolymerlatices, durch Elektrolytzusätze leicht koagulieren (z.B. DE—OS 2 931 125).

Die wärmesensible Einstellung von beliebigen Polymerdispersionen ist ganz allgemein in EP—A—0 167 189 (S. 1 Zeilen 26 bis 28 und S. 3 Zeilen 1 bis 4) beschrieben und man könnte den Eindruck gewinnen, daß die obigen Aussagen damit widerlegt seien.

Im eigentlichen Sinne handelt es sich hier aber nicht um wärmesensible Mischungen, denn der Koagulationspunkt bleibt nicht über längere Zeit konstant und die Verarbeitbarkeit der fraglichen Mischungen ist demzufolge auch nicht über eine kurze Zeitspanne hinaus gesichert. Bei dem in EP—A—0 167 189 beschriebenen Verfahren kann von Hitzekoagulation gesprochen weren (S. 4, Zeilen 1 bis 9, S. 10, Zeilen 25 bis 29), eine wärmesensible Einstellung von Polymerisatdispersionen im Sinne dieser Erfindung beschreibt das Verfahren nicht.

Die in den Beispielen 1 (S. 10, Zeilen 12 bis 15) und 5 (S. 11, Zeilen 27 bis 32) der EP—A—0 167 189 genannten Einsatzmengen von 20 und 30 Gewichtsprozent Wärmesensibilisierungsmittel, bezogen auf den Feststoff der Polymerisatdispersion, beeinflussen außerdem das gefällte Polymerisat, in dem diese Substanzen verbleiben, derart stark, daß die chemischen und physikalischen Eigenschaften des Polymerisats in technisch nicht vertretbarem Maße verändert werden.

Weiterhin erfindungswesentlich und beansprucht ist in dem Verfahren gemäß EP—A—0 167 189 die Verwendung eines Triebmittels. Dadurch sind die gemäß diesem Verfahren hergestellten Produkte zur Herstellung von z.B. Handschuhen und Elastomerfäden ungeeignet, der Verzicht auf das Triebmittel führt, wie die Vergleichsbeispiele 3 und 4 der vorliegenden Anmeldung demonstrieren, zu völlig unbrauchbaren Zubereitungen.

Unter bestimmten Bedingungen, wie sie in der DE—OS 2 659 617 beschrieben sind, lassen sich selbst elektrolythaltige Polyurethan-Dispersionen herstellen, die über eine längere Zeit bei Raumtemperatur stabil sind und in der Hitze koagulieren. Der Koagulationspunkt diese Dispersionen ist jedoch nicht genau einstellbar und ändert sich bei deren Lagerung. Gewöhnlich liegt er bei frisch bereiteten Polyurethandispersionen so hoch, daß deren einwandfreie Verarbeitung im Sinne wärmesensibler Latexmischungen nicht möglich ist. Liegt er — entsprechende Zusammensetzung des Polyurethans und geeigneten Elektrolyten vorausgesetzt — niedrig genug im frischbereiteten Zustand, so sinkt der Koagulationspunkt zu rasch ab, so daß keine Lagerstabilität des Gemisches gegeben ist.

Es hat nicht an Versuchen gefehlt, durch Einsatz von Stabilisatoren und Elektrolyten ein wärmesensibles Verhalten der Polymerdispersion zu erzeugen. Dieses ist zwar prinzipiell gelungen, so wurden von G. Sinn in: "Polymers, Paint and Colour J. 5 (1975)" Ethylenoxidkondensationsprodukte beschrieben, bei deren Anwendung als Bestandteil von Latices Elektrolytzusätze keine spontane Koagulation hervorrufen. Die Koagulation des Latex tritt erst beim Erhitzen ein.

Dieses Verfahren vermag jedoch nicht zu befriedigen, da die hierzu erforderlichen, relativ hohen Anteile an Polyether die Lagerstabilität und die Verarbeitungsstabilität der Mischungen bezüglich vorzeitiger Koagulation nachteilig beeinflussen und das Koagulationsverhalten des Systems völlig unzureichend für eine sichere praktische Anwendung ist.

Die DE—A—33 30 197 betrifft ein Wärmesensibilisierungsmittel der Konstitution der Komponente c) der vorliegenden Erfindung für Latices. Auf Seite 17 (neue Nummerierung) der DE—A—33 30 197 werden die möglichen Latexpolymerisate aufgezählt: Es handelt sich ausschließlich um Polymerisate von

ethylenisch ungesättigten Monomeren; Polykondensate und Polyadditionsverbindungen sind nicht vorgesehen.

Überraschenderweise wurde gefunden, daß Polyurethandispersionen durch Elektrolytzusätze wärmesensibel einstellbar sind, wenn den Dispersionen bestimmte Stabilisatoren zugefügt werden.

Gegenstand der Erfindung sind wärmesensible Polyurethandispersionen bestehend aus Polyurethan-Latices, Elektrolyten und Stabilisatoren, die dadurch gekennzeichnet sind, daß als Stabilisatoren die Polyharnstoffmodifizierten Polyetherpolyurethane verwendet, die in Anspruch 1 der DE—A—3 330 197 beschrieben sind. Sie werden durch Umsetzung von mehrwertigen Polyisocyanaten mit Polyethern und Polyaminen hergestellt.

In der zitierten DE—A werden die Polyetherpolyurethane zwar als Wärmesensibilierungsmittel vorgestellt, jedoch lassen sich die dort beschriebenen Verfahren zur Wärmesensibilisierung nicht auf Polyurethandispersionen übertragen.

Das erfindungsgemäße Verfahren kann an beliebigen wäßrigen Polyurethandispersionen angewendet werden, unabhängig davon, ob es sich um anionische oder kationisch hydrophil modifizierte Polyurethane handelt. Gegebenenfalls können die Dispersionen auch nicht-ionisch hydrophile Gruppen enthalten. Die Herstellung derartiger Polyurethandispersionen gehört zum bekannten Stand der Technik und ist den folgenden Literaturstellen beschrieben (Auswahl): GB—P 1 076 688, DE—PS 1 184 946, DE—AS 1 495 745, DE—OS 1 495 847, DE—OS 2 035 732, DE—OS 2 344 135, DE—OS 2 446 440, US—P 3 479 310, US—P 3 756 992, US—P 3 905 929, "Die angewandte Makromolekulare Chemie" *26,* 85—106 (1972), "Angewandte Chemie", *82,* 53—63 (1970).

Als Ausgangsmaterialien zur Herstellung der Polyurethandispersionen finden die in der Polyurethanchemie an sich bekannten

a) Di- oder Polyisocyanate,

b) Di- oder Polyhydroxylverbindungen, insbesondere Polyhydroxypolyester, -carbonate oder -ether, mit einem Molekulargewicht von 500 bis 10 000,

c) Kettenverlängerungsmittel mit gegenüber Isocyanatgruppen reaktionsfähigen Wasserstoffatomen mit einem Molekulargewicht von 18 bis 500,

d) ionische oder potentiell ionische Aufbaukomponenten, die neben den gegenüber Isocyanatgruppen reaktionsfähigen Gruppen mindestens eine tertiäre oder quaternäre Ammoniumgruppe, eine Carboxylat- oder Sulfonatgruppe oder eine in derartige Gruppen überführbare Gruppe aufweisen,

e) nicht-ionische hydrophile Aufbaukomponenten, die neben den gegenüber loscyanatgruppen reaktionsfähigen Gruppen innerhalb einer Polyetherkette eingebaute Ethylenoxideinheiten aufweisen sowie,

f) weitere Hilfs- und Zusatzstoffe wie beispielsweise Lösungsmittel, Neutralisationsmittel, Katalysatoren sowie chemisch nicht fixierte Emulgatoren.

Verwendung

Die Ausgangsmaterialien sind im einzelnen in den genannten Literaturstellen beschrieben.

Der Gehalt an (potentiell)-ionischen und gegebenenfalls nicht-ionisch hydrophilen Aufbaukomponenten wird in der Regel so gewählt, daß die Polyurethandispersionen einen Gehalt an ionischen Gruppen, insbesondere an $=N^{\oplus}=$, $—COO^{\ominus}—$ oder $—SO_3^{\ominus}$-Gruppen von 2 bis 200 Milliäquivalenten pro 100 g Feststoff und einen Gehalt an Ethylenoxideinheiten von 0 bis 25 Gew.-%, bezogen auf Feststoff, aufweisen.

Im allgemeinen erfolgt die Herstellung der Polyurethandispersionen nach einem der folgenden Verfahren:

1. Das "Acetonverfahren" nach DE—OS 1 495 745, US—P 3,479,310, wonach ein NCO-endständiges Prepolymer in der Schmelze hergestellt wird, dieses in einem geeigneten Lösungsmittel gelöst wird und in Lösung mit einem Kettenverlängerungsmittel zum Polyurethan verlängert wird. Die Lösung des Polyurethans wird dann mit Wasser gemischt, und die Polyurethan-Dispersion wird durch Abdestillation des Lösungsmittels erhalten. Dieses Verfahren eignet sich für alle genannten Polyisocyanate zur Bildung der Prepolymere einschließlich der aromatischen Diisocyanate. Mit diesem Verfahren lassen sich im wesentlichen nur lineare Polyurethane aufbauen, da vernetzte Systeme leicht zur Gelierung in der organischen Phase führen können.

2. Ein Verfahren unter Verwendung blockierter Amine oder Hydrazine als Kettenverlängerungsmittel nach DE—OS 2 725 589, US—P 4 269 748, US—P 4 192 937 und US—P 4 292 226. Hierbei wird ein hydrophiles, endständige NCO-Gruppen aufweisendes Prepolymer mit zumindest teilweise blockierten Aminen oder Hydrazinen in Abwesenheit von Wasser gemischt und dieses Gemisch anschließend mit Wasser, versetzt, wodurch das vorher blockierte Amin oder Hydrazin freigesetzt wird und als Kettenverlängerer des Prepolymeren reagiert. Nach diesem Verfahren können zur Bildung der NCO-endständigen Prepolymere auch aromatische Diiosocyanate eingesetzt werden, jedoch sind Prepolymere mit aliphatisch und/oder cycloaliphatisch gebundenen NCO-Gruppen bevorzugt.

3. Das "Schmelzdispergier-Verfahren" nach DE—OS 1 770 068, US—P 3 756 992, DE—OS 2 637 690, wonach die endständigen NCO-Gruppen des hydrophilen Prepolymer mit Harnstoff, Ammoniak oder anderen geeigneten Verbindungen in acrylierte Amine verwandelt werden und diese vor, während oder nach der Zugabe von Wasser durch Reaktion mit Formaldehyd oder verwandten Verbindungen, in

Methylol-Gruppen überführt werden. Die Methylolgruppen werden beim Ausheizen der Dispersion unter Abspaltung von Wasser und Bildung des Polyurethans auskondensiert. Dieser Prozeß kann mit allen Polyisocyanaten durchgeführt werden einschließlich der aromatischen Diisocyanate.

4. Ein Verfahren mit Kettenverlängerung der NCO-endständigen Prepolymere im wäßrigen Medium durch Dispergieren der hydrophilen Prepolymere in Wasser und enschließender Zugabe des Kettenverlängerers. Zur Dispersionsbildung kann sowohl das Wasser zum Prepolymer als auch das Prepolymer zum Wasser gegeben werden. Bei der Kettenverlängerung in wäßrigem Medium sind Prepolymere mit aliphatischen und/oder cycloaliphatischen endständigen NCO-Gruppen besonders bevorzugt. Bei Verwendung von aromatisch gebundenen NCO-Endgruppen ist eine Verkappung dieser Isocyanatgruppe vor der Zugabe von Wasser bevorzugt, wie es US—P 4 387 181 beschreibt.

Erfindungsgemäß kann die Dispergierung der Polyurethane grundsätzlich nach beliebigen Verfahren erfolgen. Hierzu zählen beispielsweise die Dispergierung ohne Verwendung von Lösern z.B. durch Vermischung der Polyurethanschmelzen mit Wasser in Geräten, die hohe Schergefälle erzeugen können, sowie die Verwendung von sehr geringen Mengen Lösungsmittel zur Plastifizierung bei der Verarbeitung in den gleichen Geräten, weiterhin die Zuhilfenahme nicht-mechanischer Dispergiermittel, wie Schallwellen extrem hoher Frequenz. Es können jedoch auch einfache Mischer, z.B. Rührkessel oder sogenannte Rücklaufmischer Verwendung finden, da die erfindungsgemäßen Polyurethane selbstdispergierbar sind.

Die Polyurethandispersionen können auch mit anderen Dispersionen verschnitten werden, wie z.B. mit Polyvinylacetat-, Polyethylen-, Polystyrol-, Polybutadien-, Polyvinylchlorid-, Polyacryat- und Copolymerisat-Kunststoff-Dispersionen.

Als Elektrolyt können je nach Ionogenität des Polyurethans a) Salze zwei- oder mehrwertiger Metalle, Basen oder die Alkalisalze sehr schwacher Säuren eingesetzt werden.

Als verdünnte, wässerige Elektrolytlösungen zur Herstellung der wärmesensiblen Latexmischungen kommen bei anionischen Polyurethandispersionen Lösungen von Erdalkalisalzen oder Salzen anderer Metalle wie zum Beispiel Salze des Aluminiums, Zinks, Eisens oder auch Doppelsalze wie etwa Kaliumaluiniumsulfat in Frage. Besonders gute Ergebnisse werden, insbesondere im Hinblick auf die Farbstabilität der aus dem Koagulat durch Trocknung erhaltenen Polymergebilde, mit Calciumsalzen gefunden.

Für kationische Polyurethandispersionen eignen sich Zusätze von verdünnten Alkalihydroxiden und Ammoniumhydroxid, aber auch Alkalisalze sehr schwacher Säuren, wie Kaliumoleat. Als verdünnte Lösung ist hier beispielsweise eine einmolare Lösung zu betrachten.

Wie oben beschrieben, wirken die in der Literatur als Wärmesensibilisierungsmittel beschriebenen Polyetherpolyurethane im Sinne der Erfindung bei Raumtemperatur als Stabilisator. Bei der Mischungsherstellung wird dem Polyurethan-Latex also zunächst das Polyetherpolyurethan zugsetzt. Erst dann erfolgt die Zugabe der Elektrolytlösung. Soll eine Mischung mit neidrigem Feststoffgehalt hergestellt werden, so empfiehlt es sich, mit dem zur Verdünnung notwendigen Wasser zunächst das Polyetherurethan und die Elektrolytlösung zu verdünnen. Auf die Weise ist die Herstellung homogener Mischungen rascher möglich als durch die Vorverdünnung des Latex.

Der Feststoffgehalt der wärmesensiblen Polyurethan-Dispersions-Mischung hat einen geringen Einfluß auf den Koagulationspunkt. Bei Änderung der Mischungskonzentration ist letzterer durch Variation der Mengen Wärmesensibilisierungsmittel und Elektrolyt zu justieren.

Der Mischung können zusätzlich noch übliche Hilfsstoffe wie Farbstoffe, Pigmente oder Pigmentformierungen und Füllstoffe sowie Hydrophobierungsmittel zugesetzt werden. Pulverförmige Pigmente werden im Interesse einer gleichmäßigen Verteilung vor der Zugabe zum Latexgemisch in geeigneten Mahlvorrichtungen vordispergiert. Füllstoffe wie Kreide, Kaolin und Schwerspat können direkt in die Mischung eingearbeitet werden. Die mittlere Korngröße und Korngrößenverteilung der Füllstoffe beeinflussen selbstverständlich die Qualität der Mischung und der daraus hergestellten Artikel.

Wärmesensible Polyurethan-Latexmischungen im Sinne der Erfindung werden zweckmäßig so hergestellt, daß man die Mischungsbestandteile in folgender Reihenfolge zusammengibt:

1. Polyurethan-Latex
2. Polyetherpolyurethan, vorverdünnt mit Wasser
3. gegebenenfalls Farbkörper, Füllstoffe und andere übliche Hilfsmittel (gegebenenfalls vordispergiert)
4. Verdünnte Elektrolytlösung

Bezogen auf den Feststoff des Polyurethan-Latex wird das Polyetherpolyurethan in Mengen von 0,1 bis 20,0 Gew.-%, vorzugsweise von 0,5 bis 7,5 Gew.-%, zugegeben. Es wird vor Zugabe gegebenenfalls mit Wasser verdünnt. Der Verdünnungsgrad hat keinen Einfluß auf de Koagulationspunkt der fertigen Mischung.

Die zugegebene Farbstoff- oder Pigmentmenge richtet sich nach dem gewünschten Farbton des Fertigartikels.

Füllstoffe können in Mengen bis zu 800 Gew.-%, bezogen auf den Feststoff des Polyurethan-Latex, zugesetzt werden. Am geeignetsten für die Faservliesverfestigung und die Tachartikelherstellung erwiesen sich Füllstoffmengen von bis zu 100 Gew.-%. Bei Schwergeschichtungen, insbesondere auf Teppichrücken, werden Menge von 100—300 Gew.-%, in Ausnahmefällen 500—800 Gew.-% Füllstoff eingearbeitet.

Die Elektrolyte werden — bezogen auf Latextrockensubstanz — in Mengen von 0,01—20 Gew.-% zugesetzt. Sie werden auf jeden Fall als verdünnte wäßrige — beispielsweise 1 n-Lösungen — zugegeben. Ihre Menge richtet sich im wesentlichen nach dem Ionomercharakter des Polyurethans. Bei den bekannten

Polyurethanlatices werden üblicherweise Elektrolytmengen von 0,1—5,0 Gew.-% benötigt.

Der Koagulationspunkt bevorzugter erfindungsgemäßer wärmesensibler Polyurethan-Latexmischungen wird zwischen 30 und 60°C liegen, aus verarbeitungstechnischen Gründen wird er besonders bevorzugt auf Temperaturen zwischen 35 und 45°C eingestellt. Der eingestellte Koagulationspunkt der erfindungsgemäßen Mischungen schwankt auch bei Lagerung über einen Zeitraum von mehreren Tagen — verdunstungsfreie, kühle Lagerung vorausgesetzt — nicht oder nur um weniger als 5°C.

Die Wärmekoagulation der Mischung wird in Abhängigkeit vom zu erzeugenden Artikel durch Strahlungs- oder Konvektionswärme, in heißen Gasen oder Flüssigkeiten herbeigeführt. Die Wahl des spezifischen Koagulationsverfahrens hängt ausschließlich vom herzustellenden Artikel ab, nicht von der Mischungszusammensetzung.

Die erfindungsgemäßen wärmesensiblen Polyurethandispersionen lassen sich beipielsweise zur Herstellung von Hohlkörpern, Flächengebilden und Elastomerfäden verwenden.

## Beispiel 1

Eine wärmesensible Latexmischung wird aus folgenden Bestandteilen gemischt (all Angaben in Gewichtsteilen:

a) 200 Teile einer 50%igen, anionischen Polyurethan-Dispersion der im Beispiel 1b der DE—OS 2 426 657 beschriebenen Polymerzusammensetzung,

15 Teile einer Mischung aus 7,5 Teilen Wasser und 7,5 Teilen eines polyharnstoffmodifizerten Polyetherpolyurethans gemäß Beispiel 1 der DE—OS 3 330 197 und

b) 58 Teile Wasser,

10 Teile Calciumchlorid, 10%ig wäßrig.

Die Bestandteile von a und b werden vorgemischt und dann b in a eingerührt. Der Feststoffgehalt dieser Latexmischung liegt bei 35% Die Koaguationstemperatur, gemessen in einem 50 ml Becherglas, das in einem Wasserbad von 80°C erwärmt wird, liegt bei 36°C.

Das Koagulat ist kompakt und läßt sich in Wasser nicht redispergieren.

Das Koagulationsverhalten der Mischung wird durch deren Lagerung bei Raumtemperatur während eines Zeitraums von 2 Wochen nicht verändert.

## Beispiel 2

Eine wärmesensible Latexmischung wird aus folgenden Bestandteilen gemischt (alle Angaben in Gewichtsteilen):

a) 250 Teile eine 40%igen, kationischen Polyurethan-Dispersion, die wie folgt hergestellt wurde:

Eine Mischung aus 150 Teilen (0,075 Mol) eines Polycarbonats auf Basis von Caprolacton und Hexandiol mit einer OH-Zahl 56 und 75 Teilen (0,075 Mol) eines auf Butanol gestarteten Polyethylenoxid-Polypropylenoxid-Polyethers (OH-Zahl 26; 78,3 Gew.-% Ethylenoxid) werden bei 110° während 30 Minuten entwässert. Es wird auf 80°C abgekühlt, mit 45, 23 Teilen (0,2692 Mol) Hexamethylendiisocyanat versetzt und bis zu einem konstanten NCO-Wert von 3,32% erhitzt. Anschließend werden 6,56 Teile (0,055 Mol) N-Methyldiethanolamin zugegeben und wieder bis zu einem konstanten NCO-Wert von 1,57% erhitzt, wobei die Reaktionstemperatur bei 60°C gehalten wird. Das Umsetzungsprodukt wird mit 1100 ml Aceton verdünnt und mit 6,4 Teilen (0,0374 Mol) isophorondiamin, gelöst in 40 Teilen Wasser, bei 40°C 5 Minuten zur Reaktion gebracht. Anschließend wird mit 10 Teilen (0,0275 Mol) einer 50%igen wäßrigen Lösung von N-Methyl-N-(methylaminocarbonyl)-aminomethansulfonsäure versalzt, nach 5 Minuten mit 460 Teilen Wasser dispergiert und das Aceton sofort abdestilliert. Man erhält eine feinteilige Dispersion mit einem Feststoffgehalt von 40,0% und einer Viskosität von 15 sec (gemessen im Ford-Becher, 4 mm Düse).

b) 22 Teile Wasser,

10 Teile einer Mischung aus 5 Teilen Wasser und 5 Teilen eines polyharnstoffmodifizierten Polyetherpolyurethans gemäß Beispiel 1 der DE—OS 3 330 197,

6 Teile einer 1 normalen, wäßrigen Ammoniaklösung

Die Bestandteile von a und b werden vorgemischt und dann b in a eingerührt. Der Feststoffgehalt der Latexmischung liegt bei 35%. Die Koagulationstemperatur — wie in Beispiel 1 beschrieben gemessen — liegt bei 36°C.

Das resultierende Koagulat ist fest und nicht redispergierbar in Wasser. Das Koagulationsverhalten der Mischung wird durch deren Lagerung bei Raumtemperatur während eines Zeitraums von 2 Wochen nicht verändert.

## Beispiel 3*)

Zur Kontrolle wird eine wärmesensible Latexmischung aus folgenden Bestandteilen gemischt (alle Angaben in Gewichtsteilen):

*) Beispiel gemäß EP—A—0 167 189, jedoch ohne den Zusatz eines Treibmittels.

a) 200 Teile einer 50%igen, anionischen Polyurethan-Dispersion gemäß Beispiel 1a.

b) 45 Teile Wasser,

20 Teile des Reaktionsproduktes eines quaternierten Polyetheramins und eines Diisocyanates, wie in der DOS 2 837 314 beschrieben und von der Sandoz Ag ®CARTAFIX U in dem Handel gebracht.

c) 20 Teile Essigsäure (10%ig) zur Einstellung eines pH-Wertes von 4,7

Teil b wird vorgemischt, in a eingerührt und dann durch Zugabe des Teils c der pH-Wert eingestellt. Der Feststoffgehalt der Mischung (bezogen auf das Polymerisat der Dispersion) liegt bei 35%. Die Koagulationstemperatur der Mischung — gemessen wie in Beispiel 1 beschrieben — liegt bei 50°C und sinkt bei Lagerung rasch auf 42°C ab. Das resultierende Koagulat ist pastös und läßt sich in Wasser redispergieren.

Beispiel 4*)

Zur Kontrolle wird eine wärmesensible Latexmischung aus folgenden Bestandteilen hergestellt (alle Angaben in Gewichtsteilen):

*) Beispiel gemäß EP—A—0 167 189, jedoch ohne den Zusatz eines Treibmittels.

a) 200 Teile einer 50%igen, anionischen Polyurethan-Dispersion gemäß Beispiel 1a.

b) 55 Teile Wasser

30 Teile Polyvinylmethylether mit einem Molgewicht 40 000, ®LUTONAL M 40, BASF AG, Ludwigshafen.

Teil b wird vorgemischt und in a eingerührt. Der Feststoffgehalt der Mischung (bezogen auf Polymerisat der Dispersion) liegt bei 35%. Die Koagulationstemperatur der Mischung — gemessen wie in Beispiel 1 beschrieben — liegt oberhalb von 75°C. Die Koagulation ist nicht vollständig und das Koagulat redispergierbar.

**Patentansprüche**

1. Wärmesensible Polyurethandispersion aus

a) Polyurethanlatex auf Basis eines dispergierten Polyurethans mit einem Gehalt an ionischen Gruppen von 2 bis 200 Milliäquivalenten pro 100 g Feststoff und mit einem Gehalt an Ethylenoxideinheiten von 0 bis 25 Gew.-%, bezogen auf Feststoff,

b) 0.01 bis 20 Gew.-%, bezogen auf Feststoff in Latex (a), Elektrolyt,

c) 0.1 bis 20 Gew.-%, bezogen auf Feststoff in Latex a), wasserlöslichem Polyetherurethan-Stabilisator der Formel

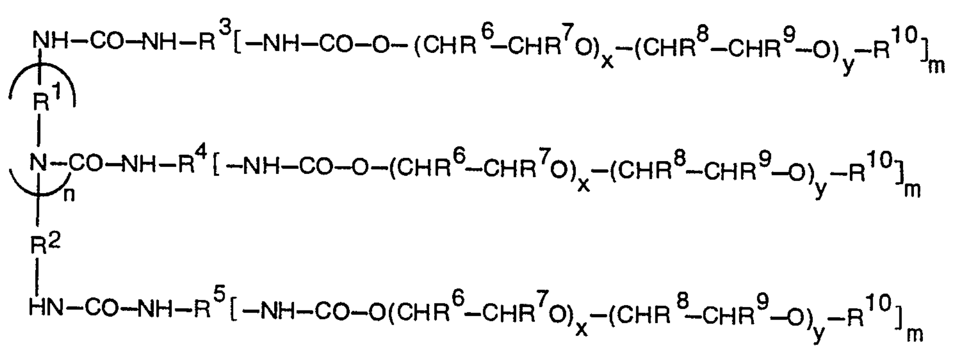

worin

$R^1$ und $R^2$ unabhängig voneinander $C_2$-bis $C_{14}$-Alkylen oder $C_3$-bis $C_{14}$-Cycloalkylen,

$R^3$, $R^4$ und $R^5$ unabhängig voneinander gegebenenfalls substituiertes Alkylen, Cycloalkylen oder Arylen,

$R^6$, $R^7$, $R^8$ und $R^9$ unabhängig voneinander Wasserstoff oder Methyl,

$R^{10}$ $C_1$-bis $C_{18}$-Alkyl, $C_6$ bis $C_{18}$-Aryl. $C_7$-bis $C_{18}$-Aralkyl oder $C_2$- bis $C_{18}$-Alkenyl bedeuten,

n für die Zahlen 0 bis 50,

m für die Zahlen 1 bis 4,

x für die Zahlen 5 bis 100 und

y für die Zahlen 0 bis 100 stehen.

2. Wärmesensible Polyurethandispersionen gemaß Anspruche 1, dadurch gekennzeichnet, daß die Polyurethanlatices aus anionisch oder kationsch modifizierten Polyurethanen a) hergestellt sind.

3. Wärmesensible Polyurethandispersionen gemäß Anspruchen 1 oder 2, dadurch gekennzeichnet, daß je nach Ionogenität des Polyurethans a) als Elektrolyt b) Salze zwei- oder mehrwertiger Metalle, Basen oder die Alkalisalze sehr schwacher Säuren eingesetzt werden.

4. Verwendung von wärmesensiblen Polyurethandispersionen gemäß Ansprüchen 1—3 zur Herstellung von Hohlkörpern.

5. Verwendung von wärmesensiblen Polyurethandispersionen gemäß Ansprüchen 1—3 zur Herstellung von Flächengebilden.

6. Verwendung von wärmesensiblen Polyurethandispersionen gemäß Ansprüchen 1—3 zur Herstellung von Elastomerfäden.

**Revendications**

1. Dispersion de polyuréthanne thermosensible constituée

a) d'un latex de polyuréthanne à base d'un polyuréthanne dispersé ayant une teneur en groupes ioniques de 2 à 200 milliéquivalents pour 100 g de matière solide et une teneur en motifs oxyde d'éthylène de 0 à 25% en poids, sur la base de la matière solide,

b) de 0,01 à 20% en poids, par rapport à la matière solide dans le latex a), d'électrolyte,

c) de 0,1 à 20% en poids, par rapport à la matière solide dans le latex a), de polyéther-uréthanne hydrosoluble stabilisant de formule

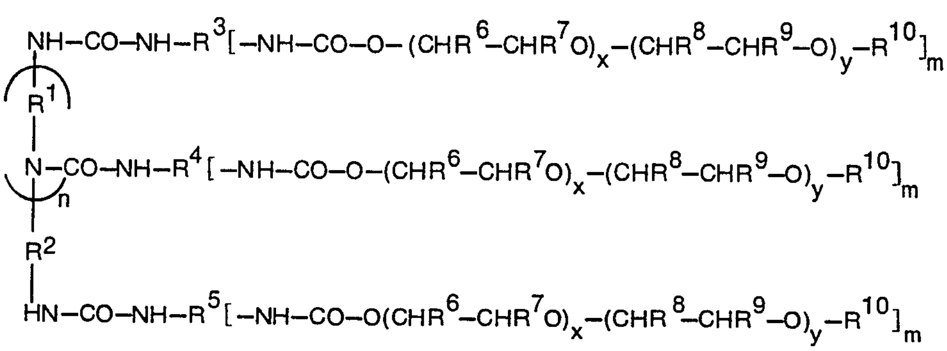

dans laquelle

$R^1$ et $R^2$ représentent, indépendamment l'un de l'autre, des groupes alkylène en $C_2$ à $C_{14}$ ou cycloalkylène en $C_3$ à $C_{14}$,

$R^3$, $R^4$ et $R^5$ représentent, indépendamment les uns des autres, des groupes alkylène, cycloalkylène ou arylène éventuellement substitués,

$R^6$, $R^7$, $R^8$ et $R^9$ représentent, indépendamment les uns des autres, l'hydrogène ou un groupe méthyle,

$R^{10}$ est un groupe alkyle en $C_1$ à $C_{18}$, aryle en $C_6$ à $C_{18}$, aralkyle en $C_7$ à $C_{18}$ ou alcényle en $C_2$ à $C_{18}$.

n représente les nombres de 0 à 50,

m représente les nombres de 1 à 4,

x représente les nombres de 5 à 100 et

y représente les nombres de 0 à 100.

2. Dispersions de polyuréthanne thermosensibles suivant la revendication 1, caratérisées en ce que les latex de polyuréthanne sont préparés à partir de polyuréthannes a) à modification anionique ou cationique.

3. Dispersions de polyuréthanne thermosensibles suivant la revendication 1 ou 2, caractérisées en ce que des sels de métaux divalents ou polyvalents, des bases ou les sels alcalins d'acides très faibles sont utilisés comme électrolyte b) selon le caractère ionogène du polyuréthanne a).

4. Utilisation de dispersions thermosensibles de polyuréthanne selon les revendications 1 à 3 pour la production de corps creux.

5. Utilisation de dispersions de polyuréthanne thermosensibles selon les revendications 1 à 3 pour la production de corps plans.

6. Utilisation de dispersions de polyuréthanne thermosensibles selon les revendications 1 à 3 pour la production de films d'élastomères.

**Claims**

1. Heat-sensitive polyurethane dispersion of

a) a polyurethane latex based on a dispersed polyurethane containing from 2 to 200 milliequivalents of ionic groups per 100 g of solids content and from 0 to 25% by weight of ethylene oxide units, based on the solids content,

b) from 0.01 to 20% by weight, based on the solids content of latex a), of electrlyte, and

c) from 0.1 to 20% by weight, based on the solids content in latex a), of water-soluble polyether urethane stabilizer corresponding to the following formula

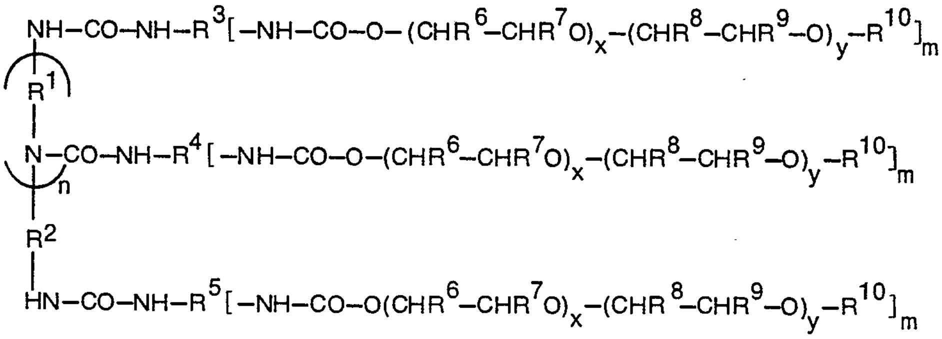

wherein

$R^1$ and $R^2$ denote, independently of one another, $C_2$—$C_{14}$-alkylene or $C_3$—$C_{14}$-cycloalkylene,

$R^3$, $R^4$ and $R^5$ denote, independently of one another, optionally substituted alkylene, cycloalkylene or arylene,

$R^6$, $R^7$, $R^8$ and $R^9$ denote, independently of one another, hydrogen or methyl and

$R^{10}$ denotes $C_1$—$C_{18}$-alkyl, $C_6$—$C_{18}$-aryl, $C_7$—$C_{18}$-aralkyl or $C_2$—$C_{18}$-alkenyl,

n stands for the numbers from 0 to 50,

m stands for the numbers from 1 to 4,

x stands for the numbers from 5 to 100 and

y stands for the numbers from 0 to 100.

2. Heat-sensitive polyurethane dispersions according to Claim 1, characterised in that the polyurethane latices are prepared from anionically or cationically modified polyurethanes a).

3. Heat-sensitive polyurethane dispersions according to Claim 1 or Claim 2, characterised in that the substances used as electrolyte b) are salts of divalent or higher valent metals, bases or the alkali metal salts of very weak acids, depending on the ionogenicity of the polyurethane a).

4. The use of heat-sensitive polyurethane dispersions according to Claims 1 to 3 for the production of hollow bodies.

5. The use of heat-sensitive polyurethane dispersions according to Claims 1 to 3 for the production of flat products.

6. The use of heat-sensitive polyurethane dispersions according to Claims 1 to 3 for the production of elastomer threads.